# DEMANDE DE BREVET EUROPEEN

(11) **EP 1 848 176 A1**
(43) Date de publication de la demande: **24.10.2007**
(21) Numéro de dépôt: 07106239.2
(22) Date de dépôt: 16.04.2007
(51) Int. Cl.: H04L 29/06, H04L 29/08

(54) **Procédé de transformation de données non supportées par un terminal, serveur, programme d'ordinateur et signal correspondants**

(30) Priorité: 21.04.2006 FR 0603621
(71) Demandeur: FRANCE TELECOM, 75015 Paris (FR)
(72) Inventeur: Clech, Armelle, 22730, TREGASTEL (FR); Clavier, Eric, 22560, TREBEURDEN (FR)
(74) Mandataire: Bioret, Ludovic

(57) **Abrégé**

L'invention concerne un procédé de transformation d'un flux numérique (23) au sein d'un terminal (20), ledit flux comprenant au moins une information de type de données, permettant de sélectionner au moins un élément applicatif spécifique (21_{1..4}) audit type de données, et des données correspondantes.
Selon l'invention, ce procédé de transformation d'un flux numérique au sein d'un terminal comprend les étapes suivantes:
- réception dudit flux numérique (23) et identification dudit type de données;
- vérification de la présence d'au moins un élément applicatif spécifique (21_{1..4}) apte à traiter ledit type de données, délivrant une information de présence;
- transformation desdites données, si ladite information de présence est négative, de façon à restituer au moins partiellement lesdites données, sous une forme dégradée.

## Description

### 1. Domaine de l'invention

La présente invention se situe dans le domaine de l'exploitation de données au sein de terminaux programmables. Le domaine connexe est celui de la gestion des flux de données numériques.

Le terminal numérique concerné par l'invention peut entre autre être un téléphone fixe, un téléphone mobile, un ordinateur personnel, un appareil photo numérique, une passerelle de services de communication domestique (en anglais « Home Gateway »), un assistant personnel (PdA), un STB (en anglais « Set Top Box », pour « Terminal Numérique Interactif »), un lecteur de fichier au format de compression de données audio MPEG Audio layer 3, et plus généralement tout type de terminal numérique disposant d'un accès à un réseau de communication ou à un périphérique permettant de gérer des logiciels.

Plus précisément, l'invention concerne la restitution de données reçues par un terminal programmable, que ces données soient supportées ou non par les applications spécifiques, associées à des services dédiés, présentes au sein du terminal.

Cette invention s'inscrit notamment dans un contexte de croissance importante de l'équipement des foyers, tant au niveau de la téléphonie que de l'accès à Internet et aux supports numériques (supports photographiques, musicaux, ...) qui a pour effet d'accroître les échanges de données entre les utilisateurs et les fournisseurs de services d'une part ou entre utilisateurs et les opérateurs de communication d'autre part. Ce phénomène s'accompagne en outre d'une demande plus pressante des utilisateurs pour une offre toujours plus diversifiée d'applications spécifiques aptes à interpréter des données de plus en plus diverses au sein des terminaux programmables.

On constate cependant qu'une grande majorité des utilisateurs n'est pas au fait des derniers services proposés par une démarche active, et ne fait bien évidemment pas partie des professionnels de l'informatique. Ainsi, pour ces personnes, devoir se tenir informées par leurs propres moyens des derniers services proposés devient vite fastidieux, et l'installation et la mise à jour de logiciels peuvent devenir problématiques.

En revanche, les utilisateurs attendent des distributeurs proposant d'acheter ou de louer des terminaux programmables une mise à leur disposition d'une offre de service importante et suivant au plus près l'évolution des offres technologiques du marché.

### 2. Solutions de l'art antérieur

### 2.1. Art antérieur

La plupart des terminaux programmables actuels proposent une large offre de services inclus de série : carnet d'adresses, album photo, bibliothèque musicale et sonore, applications informatiques, jeux, logiciels de gestion de périphériques,... Cependant, l'installation de nouvelles applications spécifiques nécessite de l'utilisateur une démarche volontaire pour souscrire au service spécifique correspondant, que celui-ci soit fourni gratuitement, ou qu'il nécessite un abonnement.

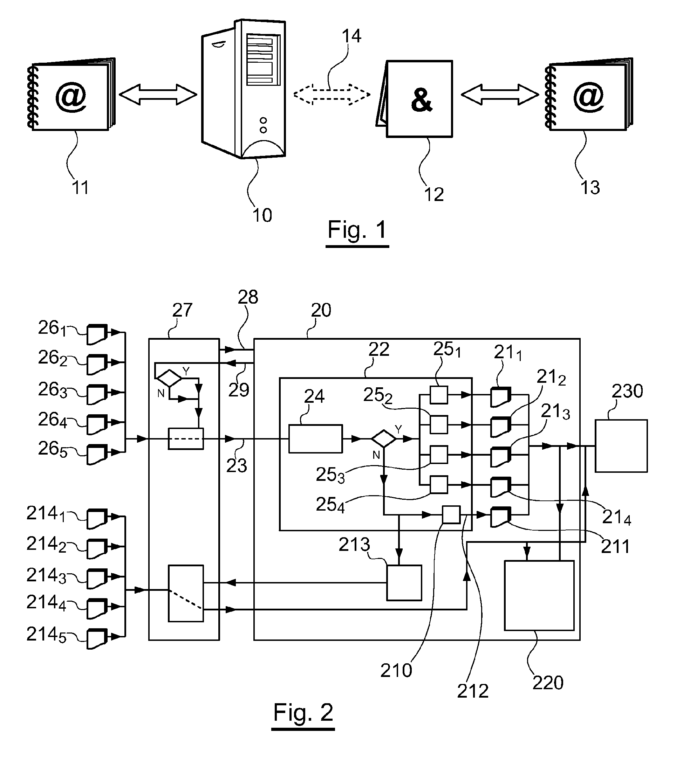

Ainsi, une technique de l'art antérieur, illustrée figure 1, consiste pour un serveur de contenu à proposer des données à des terminaux de communication. Ces données sont, la plupart du temps, typées, ce qui permet aux terminaux à qui elles sont proposées d'identifier une application apte à les traiter et/ou à les transformer. Par exemple, un serveur 10 peut transmettre des données de carnet d'adresse 11 à un terminal (par exemple une passerelle de services de communication domestique 12) en précisant à ce terminal que les données 11 transmises sont de type « carnet d'adresse ». Le terminal 12, s'il dispose de l'application de gestion des carnets d'adresse 13, accepte alors ces données et les transmet à l'application 13 en question pour qu'elles soient prises en charge. Ces opérations sont généralement appelées « synchronisations » 14.

Cependant, si le terminal ne possède pas l'application spécifique de gestion des carnets d'adresse, alors les données en provenance du serveur ne sont pas acceptées et le terminal n'est pas mis à jour.

Les types des données, encore appelés « Type Mime » (en anglais « Mime Type » pour « Multipurpose Internet Mail Extension » soit littéralement en français « Extension Multi-usage du Courrier Internet »), pouvant être transférés sont multiples : il peut s'agir par exemple de données multimédia de type vidéo ou audio, d'images, de données structurées de type carnet d'adresse ou encore météorologique. Les types de données correspondent la plupart du temps à un service proposé par un opérateur. L'art antérieur identifie des centaines de types de données différents pour lesquels le terminal doit proposer une application permettant d'accepter ces données et de les transformer ou de les prendre en charge dans le but d'obtenir un résultat attendu par un utilisateur de ce terminal.

Ces multiples types de données supposent une gestion extrêmement complexe des applications aptes à les prendre en charge. En effet, la plupart du temps il existe plusieurs applications aptes à prendre en charge un type de données spécifique, ce qui complique grandement la tâche tant des utilisateurs que des opérateurs pour maintenir un terminal à jour et permettre la prise en charge des données transférées par les serveurs.

### 2.2. Inconvénients de l'art antérieur

Un inconvénient de l'art antérieur est le refus ou le rejet systématique des données non supportées par le terminal. En effet, de telles données ne sont pas transférées par un serveur vers les terminaux actuels, puisque la synchronisation entre le serveur et le terminal qui précède le transfert de ces données, et qui est imposée par les protocoles d'échanges courants, ne peut pas être obtenue, l'identificateur du type de données n'étant pas reconnu par le terminal.

En particulier, le possesseur d'un terminal d'une ancienne génération ne peut être informé de façon systématique des nouveaux services proposés par son fournisseur d'accès au service de télécommunication. Ceci représente un frein important, voire rédhibitoire, à la diffusion de ces nouveaux services, et pénalise la pénétration des technologies. Ainsi, un tel utilisateur ne peut pas demander la mise à jour de son matériel (ne sachant pas qu'elle est disponible), ce qu'il pourrait exiger de façon légitime lorsqu'il souscrit un abonnement.

Un autre inconvénient de cette technique de l'art antérieur est lié aux interventions incessantes indispensables pour tenir à jour les équipements. En effet, un utilisateur informé qui souhaite disposer à tout moment de l'ensemble des offres de service proposées par son fournisseur et/ou son opérateur, doit, faute de remplacer quotidiennement son terminal, intervenir pour télécharger les logiciels nécessaires. Ceci suppose qu'il sache quelles applications doivent être téléchargées, et sur quel serveur, et qu'il procède ensuite à leur installation, opération imposant inévitablement une succession de saisies d'informations (souvent techniques) requises par le concepteur du programme ou du logiciel. Ces deux opérations nécessitent un niveau de technicité non négligeable et des temps d'attente sans possibilité d'utiliser l'équipement.

Un autre inconvénient de ces techniques de l'art antérieur est lié à un encombrement inutile des réseaux de communication par des tentatives de connexions infructueuses alourdies par le formalisme et les va-et-vient multiples imposés par les protocoles d'échange. Ce gaspillage des ressources des réseaux est préjudiciable à la fois pour le fournisseur, l'opérateur et l'utilisateur.

### 3. Résumé de l'invention

L'invention concerne un procédé de transformation d'un flux numérique au sein d'un terminal, ledit flux comprenant au moins une information de type de données, permettant de sélectionner au moins un élément applicatif spécifique audit type de données, et des données correspondantes. Selon l'invention, ce procédé comprend les étapes suivantes :
- réception dudit flux numérique et identification dudit type de données ;
- vérification de la présence d'au moins un élément applicatif spécifique apte à traiter ledit type de données, délivrant une information de présence ;
- transformation desdites données, si ladite information de présence est négative, de façon à restituer au moins partiellement lesdites données, sous une forme dégradée.

Ainsi, dans au moins un mode de réalisation de l'invention, un terminal peut prendre en charge des données non supportées par l'ensemble des applications et/ou services installés (éléments applicatifs spécifiques) au sein de ce même terminal. Plus précisément, cette technique rend possible la synchronisation entre un terminal récepteur de données et un serveur émetteur de données quel que soit le type de données à transférer même en l'absence de l'application (ou de sa version mise à jour) requise.

L'invention permet ainsi à un utilisateur de terminal numérique l'accès à des informations, et notamment des données, indépendamment de la mise à jour et/ou de la version du terminal.

Dans au moins un mode de réalisation particulier de l'invention, lesdites données sont décrites selon un format SyncML.

Ainsi, les données peuvent notamment être intégrées dans un flux au format SyncML de façon à être diffusées vers un grand nombre de terminaux usuels. SyncML est en effet un protocole de synchronisation normalisé très répandu parmi les terminaux tels que des téléphones portables et des passerelles de services de communication domestique.

Selon une caractéristique originale de l'invention, ladite étape de transformation met en oeuvre au moins une des formes de restitution appartenant au groupe comprenant :
- affichage sous une forme textuelle ;
- restitution sonore et/ou vocale ;
- restitution sous forme d'image fixe ou animée.

Ainsi, l'invention vise à permettre de restituer du texte, des images, mais aussi des extraits musicaux, ou de la vidéo, ou encore une combinaison de ces types d'informations. Ainsi, par exemple dans le cadre de la sortie d'un nouveau film, on peut envisager, grâce à l'invention, d'afficher dans une première zone de l'écran d'un téléphone mobile le nom et un synopsis du film, alors même qu'il ne possède pas l'application de prise en charge des vidéos.

Selon un aspect particulier de l'invention, ladite étape de réception comprend :
- une étape de réception par ledit terminal d'une demande de requête de transfert de données émise par un serveur ;
- une étape d'émission d'une requête de transfert de données émises par ledit terminal à destination dudit serveur ;
- une étape de réception dudit flux émis par ledit serveur vers ledit terminal.

Ainsi, l'invention permet d'autoriser la synchronisation de tout type de données émises à destination du terminal et par la suite leur réception sur le terminal. Ceci permet par conséquent de désengorger les réseaux de communication en autorisant le transfert des données et en évitant la répétition des tentatives de connexion, en cas d'échec de la synchronisation.

Selon un autre aspect particulier de l'invention, ladite étape de réception de ladite demande de requête met en oeuvre un protocole de type SAN.

Selon une caractéristique particulière de l'invention, ledit terminal reçoit une information représentative d'une proposition de chargement d'un élément applicatif spécifique apte à transformer lesdites données sous une forme autre que la forme dégradée.

Ainsi, les utilisateurs de terminaux mettant en oeuvre l'invention bénéficient en permanence d'une information sur les nouveaux usages de ces terminaux. Ils ont d'autre part automatiquement accès à une offre de propositions commerciales correspondantes s'ils le souhaitent. Enfin les utilisateurs peuvent, par l'intermédiaire de cet élément applicatif spécifique, avoir accès à une restitution de l'information sous une autre forme que la forme dégradée, qui présente par exemple un mise en page améliorée ou l'adjonction d'élément visuels complémentaires.

L'invention concerne également un terminal comprenant des moyens de transformation d'un flux numérique, ledit flux comprenant au moins une information de type de données, permettant de sélectionner au moins un élément applicatif spécifique audit type de données, et des données correspondantes.

Selon l'invention, un tel terminal comprend :
- des moyens de réception dudit flux numérique et d'identification dudit type de données ;
- des moyens de vérification de la présence d'au moins un élément applicatif spécifique apte à traiter ledit type de données, délivrant une information de présence ;
- des moyens de transformation desdites données, si ladite information de présence est négative, de façon à restituer au moins partiellement lesdites données, sous une forme dégradée.

Un tel terminal peut comprendre, plus généralement, des moyens pour mettre en oeuvre tout ou partie des étapes du procédé détaillées ci-dessus.

L'invention concerne également un serveur d'application comprenant des moyens d'émission d'une demande de requête de transfert de données à destination d'au moins un terminal, des moyens de réception d'une requête de transfert de données émise par ledit au moins un terminal, et des moyens de transfert d'un flux numérique audit au moins un terminal, au moins une donnée dudit flux étant destinée à être transformée par un élément applicatif spécifique dans le ou lesdits terminaux.

Selon l'invention, si ladite requête de transfert indique que ledit terminal ne dispose pas d'au moins un élément applicatif apte à traiter lesdites données, lesdits moyens de transfert comprennent des moyens d'introduction, au sein dudit flux, d'au moins une information permettant le traitement, au moins sous une forme dégradée, dudit flux.

Un tel serveur peut comprendre, plus généralement, des moyens pour mettre en oeuvre tout ou partie des étapes du procédé détaillées ci-dessus.

L'invention concerne encore un serveur d'application du type décrit ci-dessus tel que ladite au moins une information permettant le traitement est une information représentative d'une proposition de chargement d'un élément applicatif spécifique apte à transformer lesdites données sous une forme autre que la forme dégradée.

Ainsi, un tel serveur peut prendre en charge l'émission d'informations sur les offres de service conjointement à l'émission des données.

L'invention concerne également les produits programmes d'ordinateur téléchargeables depuis un réseau de communication et/ou stockés sur un support lisible par ordinateur et/ou exécutable par un microprocesseur, pour la mise en oeuvre des procédés décrits ci-dessus, dans un terminal d'une part et dans un serveur d'autre part.

L'invention concerne également un signal émis par un serveur et représentatif d'au moins une donnée d'un flux numérique transmis vers un terminal.

Selon l'invention, si aucun procédé applicatif spécifique n'est mis en oeuvre pour transformer ladite au moins une donnée au sein dudit terminal, un tel signal comprend au moins une information permettant le traitement, au moins sous une forme dégradée, dudit flux.

L'invention concerne également un signal tel que décrit ci-dessus pour lequel ladite au moins une information permettant le traitement est une information représentative d'une proposition de chargement d'un élément applicatif spécifique apte à transformer lesdites données sous une forme autre que la forme dégradée.

L'invention concerne encore les signaux tels que décrits précédemment pour lesquels lesdites informations sont décrites selon un format de type SyncML.

### 4. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, qui a été commentée dans le paragraphe 2.1, est un diagramme de blocs illustrant un mode de réalisation de la synchronisation de données entre un serveur et un terminal selon l'art antérieur ;
- la figure 2 est un diagramme de blocs représentant un mode de réalisation d'un procédé de synchronisation de données entre un serveur et un terminal selon l'invention ;
- la figure 3 illustre l'affichage de données non supportées par une passerelle de communication sur l'écran d'un ordinateur connecté à cette passerelle.

### 5. Description détaillée de l'invention

### 5.1. Rappel du principe de l'invention

L'invention propose donc de restituer sous une forme exploitable (affichage d'un texte, message ou morceaux musical, affichage ou projection d'images animées sur un écran) des données, associées éventuellement à des métadonnées (parmi lesquelles les données de texte, les données audio et les données convertibles en image et/ou vidéo), non supportées par les applications présentes dans un terminal.

Dans ce contexte, un mode de réalisation de l'invention consiste à mettre en oeuvre, au sein du terminal, un procédé gérant l'ensemble des données non supportées par les autres applications spécifiques installées sur le terminal.

Ces données peuvent être restituées au moins dans une version dégradée. Par version dégradée, on entend par exemple une baisse de la qualité de restitution, une restitution partielle, une restitution selon une technique autre que celle requise à l'origine, une restitution d'informations relatives aux données considérées...

Ainsi, dans un mode de réalisation particulier, l'invention propose de présenter à l'utilisateur du terminal, par exemple par l'intermédiaire d'un message d'alerte, des informations et/ou une offre de service, gratuite ou payante, concernant l'application spécifique prévue pour supporter les données que le procédé selon l'invention a rendues consultables.

### 5.2. Description d'un mode de réalisation

Par la suite, on présente notamment le cas d'une mise en oeuvre du procédé de transformation pour la synchronisation de types de données non supportées par un terminal muni d'une application de type «client de synchronisation».

Il est clair cependant que l'invention ne se limite pas à cette application particulière, mais peut également être mise en oeuvre dans de nombreux autres domaines, et par exemple dans la téléphonie mobile.

On présente, en relation avec la figure 2, un mode de réalisation du procédé permettant la synchronisation de données de météorologie, et mis en oeuvre dans l'architecture matérielle d'un terminal 20 de type passerelle de services de communication domestique ne comprenant pas de programme spécifique (21₁ à 21₄) supportant ce type de données.

Selon une architecture universelle, un tel terminal renferme entre autres, outre des programmes spécifiques d'application (21₁ à 21₄) et des périphériques (écran, haut-parleur, clavier...) internes 220 et/ou externes 230, un module de synchronisation 22, encore appelé client de synchronisation, vers lequel est dirigé le flux de données numériques 23 reçues par le terminal 20. Un tel client de synchronisation est pourvu d'un outil d'analyse syntaxique 24 des données numériques correspondant au flux 23 et formatées selon le format d'échange prédéterminé en vigueur.

Dans ce mode de réalisation de l'invention, les données correspondant au flux 23 sont décrites dans le format SyncML. Toujours selon un fonctionnement standard, si l'outil d'analyse syntaxique 24 reconnaît l'identificateur de type de données (« Type Mime ») associé au flux 23, le client de synchronisation 22 fournit tout ou partie des données identifiées par le "Type Mime" du flux SyncML 23 au connecteur de synchronisation (25₁ à 25₄) ledit connecteur étant approprié pour que ces données soient utilisées et/ou prises en charge par une application spécifique.

Le transfert des données 26₁ à 26₅ d'un réseau Internet global (par exemple suite à une notification de synchronisation suivant le protocole SAN, de l'anglais « Server Alerted Notification » pour « Notification d'alerte du serveur », ...) émises par un serveur central 27 à destination d'au moins un terminal 20 respecte un protocole d'échange, préférentiellement de type IP (de l'anglais « Internet Protocol» pour « Protocole Internet ») dans ce mode de réalisation de l'invention.

Ainsi préalablement au transfert des données 26₁ à 26₅ dans un flux SyncML 23, le serveur 27 adresse une demande de requête de transfert de données 28 vers le terminal 20. Cette demande 28, encore appelée demande de synchronisation par notification, notifie au terminal l'identificateur de type de données, ou « type Mime », associé au flux SyncML 23. Par retour, le terminal 20 se connecte (flux 29) au serveur 27, après avoir authentifié ou non l'identificateur de type de données, pour autoriser la requête de transfert des données du serveur vers le terminal.

Le terminal 20 comprend en outre un connecteur de synchronisation par défaut 210 mettant en oeuvre le procédé de transformation selon l'invention. Ce connecteur est pourvu d'une application d'analyse syntaxe et/ou grammaticale (également appelée « parser ») pour la lecture des données formatées. Lorsque l'identificateur de type de données associé au flux SyncML 23 ne peut pas être authentifié ou en d'autres termes lorsque aucune application spécifique présente sur le terminal ne correspond à cet identificateur, le terminal 20 initialise tout de même la synchronisation telle qu'elle est prévue par le protocole, et le flux SyncML 23 est transféré vers le connecteur par défaut 210. Ce connecteur 210 transforme alors les données du flux 23 pour les rendre interprétables dans un format compris par l'application par défaut 211 qui est mise en oeuvre dans le terminal.

Le connecteur par défaut substitue également au type Mime attaché aux flux de données reformatées un identificateur de ressource locale (indiqué par LocURI) désignant l'application par défaut 211. De telles données reformatées 212 sont ensuite transférées du connecteur 210 vers l'application par défaut 211.

Dans ce mode de réalisation particulier de l'invention, un module 213 associé au connecteur par défaut 210 interroge le serveur 27 pour transmettre vers les périphériques 220 et/ou 230, par exemple sous forme de texte ou de bande sonore, des informations 214₁ à 214₅ correspondant respectivement aux données 26₁ à 26₅. Ces informations 214₁ (respectivement 214₂, 214₃, 214₄, 214₅) contiennent une présentation de l'application spécifique permettant de transformer les données 26₁ (respectivement 26₂, 26₃, 26₄, 26₅) et une proposition de souscrire à cette application spécifique. Ces informations de souscription peuvent être incluses au sein même du flux SyncML.

Dans ce même mode de réalisation particulier de l'invention, l'application 211 associée au connecteur par défaut 210 est un répertoire du gestionnaire de fichier dans lequel les données synchronisées sont récupérées.

### 5.3. Autres caractéristiques optionnelles et avantages

On considère par la suite un exemple de flux 23 de données météorologiques transmis par un serveur 27 et reçu par une passerelle de communication 20. Ce flux est au format « XML » (« eXtensible Markup Language » pour « langage de balisage extensible ») et contient des métadonnées :

```
       <Sync>
              <Add>
                     <CmdID>22</CmdID>
                     <Meta>
                     <Type xmlns= »syncml :metint »>text/x-meteo</Type>
                     </Meta>
                     <Item>
                     <Source>
                     <LocURI>1<LocURI>
                     </Source>
                     <Data>! [CDATA[BEGIN :meteofrance localisation,
                     departement : cotes d'armor; code postal 22730 ;
                     type_meteo: marine ; date : 20050907T124002Z;
                     previsions : pluies alternées d'eclaircies ; temperatures : 12
                     à 16 °C ; vent : faible 1 beaufort oriente nord ; END :
                     meteofrance ]]>
                     </Data>
                     </Item>
              </Add>
       </Sync>
```

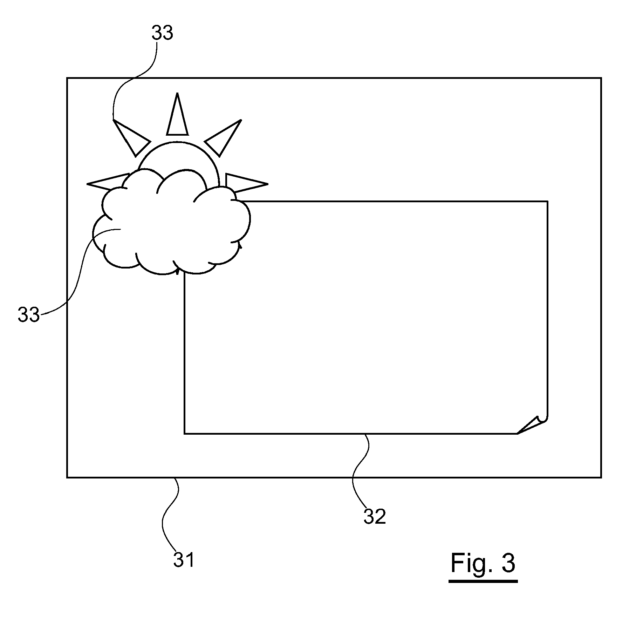

En référence à la figure 3, selon l'approche classique de l'art antérieur, le périphérique d'affichage 31 de la passerelle 30, non représentée, (en l'occurrence l'écran d'un ordinateur connecté à cette passerelle 30) affiche alors le texte 32 suivant accompagné des illustrations graphiques 33 sous forme d'une fenêtre s'ouvrant automatiquement à l'ouverture du navigateur Internet (de l'anglais « pop-up » pour « fenêtre surgissante ») si l'application de Météo-France (Marque Déposée) est présente sur la passerelle 30 :
*Dans les Côtes d'Armor, ce vendredi 7 septembre 2005 à 12h40, la météo marine prévoit des pluies alternées d'éclaircies et des températures entre 12 à 16 °C. Le vent sera faible 1 beaufort oriente nord.*

À défaut, dans ce mode de réalisation de l'invention, le connecteur par défaut et l'application associée du terminal prennent en charge le flux de données de façon à restituer ces données. Le connecteur par défaut récupère les données textuelles entre les marqueurs (de l'anglais « tag ») BEGIN et END et remplace les points virgules par des retours à la ligne. Sur le périphérique 31 s'affiche alors dans un « pop-up » et sous forme exclusivement de texte:
*Localisation departement : cotes d'armor*
*Code postal 22730*
*Type_meteo : marine*
*Date : 20050907T124002Z*
*Previsions : pluies alternees d'eclaircies*
*Temperatures : 12 à 16 °C*
*Vent: faible 1 beaufort oriente nord.*

Dans un mode de réalisation complémentaire, l'utilisateur reçoit, par exemple lorsqu'il ferme la fenêtre « pop-up », par l'intermédiaire de l'opérateur, un message d'information lui proposant de souscrire à une formule d'abonnement aux services fournis par un site Internet de Météo-France (Marque Déposée).

Ce mode de réalisation de l'invention permet donc de faire profiter l'utilisateur d'un terminal numérique d'une offre de service remise à jour et de lui permettre de découvrir et de souscrire rapidement aux services susceptibles de l'intéresser, sans qu'il soit nécessaire que l'utilisateur effectue une démarche proactive visant à obtenir un service dont il n'a pas, à priori, connaissance. On simplifie ainsi grandement l'accès des utilisateurs à des sources d'information et de services proposées par les opérateurs.

Dans un autre mode de réalisation de l'invention, le terminal numérique peut être un téléphone portable. Ainsi, la prise en charge des données issues du flux numérique peut être réalisée différemment. En effet, ce type de terminal est principalement destiné à restituer des informations auditives. La prise en charge des données par l'application peut alors consister en une restitution sonore automatique. Cette restitution est rendue possible par les capacités d'interprétation et de synthèse vocale présentes dans ces terminaux.

La prise en charge générique des données peut donc être différente selon les terminaux.

## Revendications

1. Procédé de transformation d'un flux numérique au sein d'un terminal, ledit flux comprenant au moins une information de type de données, permettant de sélectionner au moins un élément applicatif spécifique audit type de données, et des données correspondantes,
**caractérisé en ce qu'**il comprend les étapes suivantes :
- réception dudit flux numérique et identification dudit type de données ;
- vérification de la présence d'au moins un élément applicatif spécifique apte à traiter ledit type de données, délivrant une information de présence ;
- transformation desdites données, si ladite information de présence est négative, de façon à restituer au moins partiellement lesdites données, sous une forme dégradée.

2. Procédé de transformation selon la revendication 1, **caractérisé en ce que** ladite étape de transformation met en oeuvre au moins une des formes de restitution appartenant au groupe comprenant :
- affichage sous une forme textuelle ;
- restitution sonore et/ou vocale ;
- restitution sous forme d'image fixe ou animée.

3. Procédé de transformation selon l'une quelconque des revendications 1 et 2, **caractérisé en ce que** ladite étape de réception comprend :
- une étape de réception par ledit terminal d'une demande de requête de transfert de données émise par un serveur ;
- une étape d'émission d'une requête de transfert de données émises par ledit terminal à destination dudit serveur ;
- une étape de réception dudit flux émis par ledit serveur vers ledit terminal.

4. Procédé de transformation selon l'une des revendications précédentes, **caractérisé en ce que** ledit terminal reçoit une information représentative d'une proposition de chargement d'un élément applicatif spécifique apte à transformer lesdites données sous une forme autre que la forme dégradée.

5. Terminal comprenant des moyens de transformation d'un flux numérique, ledit flux comprenant au moins une information de type de données, permettant de sélectionner au moins un élément applicatif spécifique audit type de données, et des données correspondantes,
**caractérisé en ce qu'**il comprend :
- des moyens de réception dudit flux numérique et d'identification dudit type de données ;
- des moyens de vérification de la présence d'au moins un élément applicatif spécifique apte à traiter ledit type de données, délivrant une information de présence ;
- des moyens de transformation desdites données, si ladite information de présence est négative, de façon à restituer au moins partiellement lesdites données, sous une forme dégradée.

6. Serveur d'application comprenant des moyens d'émission d'une demande de requête de transfert de données à destination d'au moins un terminal, des moyens de réception d'une requête de transfert de données émise par ledit au moins un terminal, et des moyens de transfert d'un flux numérique audit au moins un terminal, au moins une donnée dudit flux étant destinée à être transformée par un élément applicatif spécifique dans le ou lesdits terminaux,
**caractérisé en ce que**, si ladite requête de transfert indique que ledit terminal ne dispose pas d'au moins un élément applicatif apte à traiter lesdites données, lesdits moyens de transfert comprennent des moyens d'introduction, au sein dudit flux, d'au moins une information permettant le traitement, au moins sous une forme dégradée, dudit flux.

7. Serveur selon la revendication 6, **caractérisé en ce que** ladite au moins une information permettant le traitement est une information représentative d'une proposition de chargement d'un élément applicatif spécifique apte à transformer lesdites données sous une forme autre que la forme dégradée

8. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution des étapes du procédé selon l'une au moins des revendications 1 à 4, lorsqu'il est exécuté sur un ordinateur.

9. Signal émis par un serveur et représentatif d'au moins une donnée d'un flux numérique transmis vers un terminal, **caractérisé en ce que**, si aucun procédé applicatif spécifique n'est mis en oeuvre pour transformer ladite au moins une donnée au sein dudit terminal, il comprend au moins une information permettant le traitement, au moins sous une forme dégradée, dudit flux.

10. Signal selon la revendication 9, **caractérisé en ce que** ladite au moins une information permettant le traitement est une information représentative d'une proposition de chargement d'un élément applicatif spécifique apte à transformer lesdites données sous une forme autre que la forme dégradée.

11. Signal selon l'une quelconque des revendications 9 et 10, **caractérisé en ce que** lesdites informations sont décrites selon un format de type SyncML.
